# EUROPÄISCHE PATENTANMELDUNG

(11) **EP 0 813 277 A2**
(43) Veröffentlichungstag der Anmeldung: **17.12.1997**
(21) Anmeldenummer: 97105516.5
(22) Anmeldetag: 03.04.1997
(51) Int. Cl.: H02G 3/26

(54) **Vorverkabeltes Auskleidungsteil für die Innenauskleidung eines Fahrzeuges**

(30) Priorität: 13.06.1996 DE 19623575
(71) Anmelder: Volkswagen Aktiengesellschaft, 38436 Wolfsburg (DE)
(72) Erfinder: Greiner, Siegfried, 38442 Wolfsburg (DE)

(57) **Zusammenfassung**

Die Erfindung bezieht sich auf ein mit einem elektrischen Kabelstrang vorverkabeltes Auskleidungsteil für die Innenauskleidung eines Fahrzeuges. Sie löst die Aufgabe, ein solches Auskleidungsteil so zu gestalten, daß dessen Vorverkabelung erleichtert ist und mit reduziertem Aufwand einhergeht und eine Demontage des Kabelstranges auf möglichst einfache Weise vorgenommen werden kann. Dazu weist das Auskleidungsteil (1) entlang des anzuordnenden Kabelstranges (7) ein Klettband (5; 9) oder im Abstand angeordnete Klettbandabschnitte für den Kabelstrang (7) auf, und der Kabelstrang (7) ist mit einem Mantel oder im Abstand angeordneten Manschetten (8; 10; 12) aus einem geeigneten Material zur Bildung einer lösbaren Haftverbindung mit dem Klettband (5; 9) oder den Klettbandabschnitten versehen.

## Beschreibung

Die Erfindung betrifft ein vorverkabeltes Auskleidungsteil für die Innenauskleidung eines Fahrzeuges, insbesondere einen vorverkabelten Fahrzeughimmel.

Es ist bekannt, die Verbindung elektrischer Komponenten in einem Fahrzeug mit dessen elektrischem System über in oder an Auskleidungsteilen der Innenauskleidung des Fahrzeuges angeordnete Leitungen vorzunehmen.

So ist aus der DE 33 37 596 C2 eine Kabelanordnung für einen vorverkabelten Teppichboden bekannt, bei der zu einem Kabelstrang zusammengefaßte elektrische Leitungen formversteift in karosserieseitigen Vertiefungen, beispielsweise Kanälen oder einer Bodenwanne, angeordnet sind, und der Kabelstrang zur Erzielung einer für eine automatisierte Montage erforderlichen Formsteife Versteifungselemente aufweist. Gemäß einer Ausführungsform bildet der Teppichboden bzw. das Teppichbodenformteil den Träger und zugleich die Versteifung für den Kabelstrang, indem dieser durch Verkleben oder Verschweißen mit dem Teppichboden verbunden ist. Der Kabelstrang kann auch mit einem Schaumstoffkörper versehen oder in einen solchen - gegebenenfalls gemeinsam mit einer Stahlseele zu dessen Versteifung - eingebettet und selbsthaftend in den Teppichboden eingeklebt sein.

Aus der DE 33 15 375 C2 ist ein Formteil als freitragende Himmelsschale für die ganzflächige Innenverkleidung des Dachbereiches eines Personenkraftwagens bekannt, das aus einem vorzugsweise oberflächenkaschierten mechanisch und akustisch dämpfendem Material, beispielsweise einem verpreßten Faservlies, mit an der Dachkonstruktion arretierbaren Befestigungsmitteln und in die Himmelsschale eingearbeiteten Kanälen für elektrische Kabel besteht und mit diesen eine bausatzartige integrierte Einheit bildet. Die Kabel, z.B. für die Innenbeleuchtung oder Lautsprecher, können zur Bildung dieser integralen Einheit bei der Ausformung der Himmelsschale in diese mit eingepreßt oder anderweitig auf deren dem Fahrzeuginnern abgewandten Oberfläche in dauerhaft haftender Form aufgebracht werden.

In der DE 38 37 171 C2 ist ein Fertighimmel für Kraftfahrzeuge beschrieben, bei dem auf der gesamten dem Fahrzeuginnern abgewandten Fläche Leiterschichten oder Leiternetze ausgebildet und somit fest in den Fahrzeughimmel integriert sind, um eine Montage oder Demontage von elektrischen Verbrauchern oder nachträglich vorzunehmenden Änderungen zu erleichtern. Zum Anzapfen sind Stromentnahmestellen vorgesehen.

Ferner ist in der DE 40 12 635 C2 eine Rahmenanordnung für ein Fahrzeugdach, insbesondere für ein Schiebe- oder Schiebehebedach, beschrieben, die gemäß einer bevorzugten Ausgestaltung angeformte Clipsverbindungen zur Vormontage eines Kabelbaumes und nachfolgenden endgültiger Fixierung desselben, beispielsweise durch Schraubverbindungen, aufweist.

Die beschriebenen Anordnungen für die Vorverkabelung eines Auskleidungsteiles für die Innenverkleidung eines Fahrzeuges lassen durch die integrale oder weitgehend integrale Einbindung eines Kabelstranges in das Auskleidungsteil hinsichtlich ihres Erstellungsaufwandes bei der Montage und auch hinsichtlich kundendienstlicher Eingriffe, d.h. Demontage, Montage und Wiederverwendung des Auskleidungsteiles oder des Kabelstranges, Wünsche offen.

Es ist Aufgabe der Erfindung, ein vorverkabeltes Auskleidungsteil für die Innenauskleidung eines Fahrzeugs nach dem Oberbegriff des Anspruchs 1 zu schaffen, bei dem die Vorverkabelung erleichtert und mit reduziertem Aufwand verbunden ist und eine Demontage desselben auf möglichst einfache Weise vorgenommen werden kann.

Diese Aufgabe wird bei einem gattungsgemäßen vorverkabelten Auskleidungsteil durch die kennzeichnenden Merkmale des Anspruchs 1 gelöst. Das Auskleidungsteil weist entlang des anzuordnenden Kabelstranges ein Klettband oder im Abstand angeordnete Klettbandabschnitte für den Kabelstrang auf. Der Kabelstrang ist mit einem durchgehenden Mantel oder im Abstand angeordneten und mit den Klettbandabschnitten korrespondierenden Manschetten aus einem geeigneten Material zur Bildung einer lösbaren Haftverbindung mit dem Klettband oder den Klettbandabschnitten versehen. Dadurch kann das Auskleidungsteil auf einfache Weise vorverkabelt werden. Im Falle eines Kabeldefektes, beispielsweise infolge von Alterungsvorgängen, können das Auskleidungsteil demontiert, der defekte Kabelstrang problemlos ausgetauscht und das mit einem neuen Kabelstrang versehene Auskleidungsteil wieder montiert werden. Im Falle eines defekten Auskleidungsteils kann andererseits der Kabelstrang problemlos demontiert und wiederverwendet werden.

Weiterhin wird dadurch eine einfache Möglichkeit geschaffen, den Kabelstrang und den Dachhimmel im Rahmen des immer bedeutender werdenden Werkstoffrecyclings voneinander zu trennen und zur Herstellung neuer Produkte wieder zu verwenden.

Das Klettband oder die Klettbandabschnitte werden vorzugsweise auf der dem Fahrzeuginnenraum abgewandten Seite angeordnet, so daß die vorverkabelten elektrischen Kabelsträge von der Fahrzeuginnenraumseite optisch durch das Auskleidungsteil verdeckt werden.

Der Mantel und die Manschetten können aus einem textilen Gewebe oder einem Vliesmaterial gebildet sein, das eine flauschige Oberfläche aufweist, damit eine Haftverbindung an dem Klettband oder den Klettbandabschnitten sichergestellt wird. Die flauschige Oberfläche kann durch ein spiralförmiges Gitter aus biegsamen Fäden bedeckt sein, um den Mantel oder die Manschetten mechanisch zu festigen.

Die Anordnung des Klettbandes oder der Klettbandabschnitte am Auskleidungsteil kann entweder durch eine Verklebung erfolgen, oder, bei einem mehrschichtigen Aufbau des Auskleidungsteils, durch Einsetzen in eine vorbestimmte Ausnehmung in der äußeren Schicht und Aufsetzen auf die unter dieser angeordneten Schicht, wobei die Ausnehmung schmaler als das jeweilige Klettband ist, so daß dieses in den Randbereichen von der äußeren Schicht überlappt ist, und Verpressen mit diesen Schichten. Dabei ist es für die Festigkeit der Preßverbindung von Vorteil, wenn das Klettband oder die Klettbandabschnitte in den Überlappungsbereichen frei von Hafthaken sind.

Montagetechnisch kann es von Vorteil sein, wenn die Manschetten elastisch aufweitbar ausgebildet sind, oder mit einem spiralförmigen Gitter aus biegsamen Fäden nach Anspruch 4 versehen sind, so daß sich die Manschette durch Zusammendrücken in axialer Richtung radial aufweitet und nach Einschieben des Kabelstranges unter Druck an diesen anlegt. Es ist jedoch auch möglich, die Manschetten als Wickelmanschetten auszubilden, die durch Verkleben mit dem Kabelstrang fixiert werden.

Die Erfindung wird nachstehend anhand von Ausführungsbeispielen erläutert. In der zugehörigen Zeichnung zeigen:
- Fig. 1:: einen Ausschnitt aus einem erfindungsgemäß vorverkabelten Fahrzeughimmel,
- Fig. 2:: einen Querschnitt durch eine andere Ausführungsform eines vorverkabelten Fahrzeughimmels im Bereich eines angeordneten Kabelstranges,
- Fig. 3:: einen Abschnitt eines Kabelstranges mit einer elastisch an diesem anliegenden Manschette und
- Fig. 4:: einen Abschnitt eines Kabelstranges mit einer Wickelmanschette.

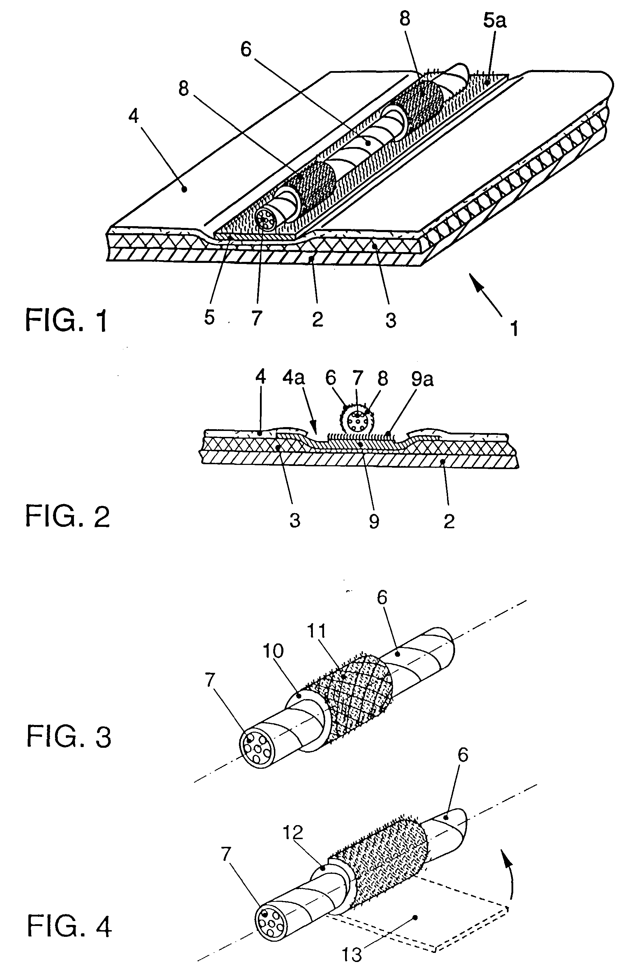

Fig. 1 zeigt ein Stück eines vorverkabelten Fahrzeughimmels 1. Dieser weist eine Dekorschicht 2, darauf eine Vliesschicht 3 und auf dieser eine Vliesschicht 4 auf. Auf dieser Vliesschicht 4 ist ein Klettband 5 aufgeklebt, dessen freie Oberfläche eine Vielzahl von Hafthaken 5a aufweist, auf dem ein durch ein textiles Wickelband 6 zusammengehaltener Kabelstrang 7 lösbar haftend über an diesem fixierte und im Abstand angeordnete Manschetten 8 befestigt ist. Die Manschetten 8 sind aus einem elastischem Vliesmaterial mit flauschiger Oberfläche gebildet und liegen fest am Kabelstrang 7 an.

Fig. 2 zeigt eine weitere Ausführungsform. Bei dieser ist ein Klettband 9, dessen Randbereiche frei von Hafthaken 9a sind, in einer Ausnehmung 4a der dem Fahrzeuginnern angewandten äußeren Vliesschicht 4 auf der Vliesschicht 3 angeordnet. Das Klettband 9 ist an seinen Randbereichen von der Vliesschicht 4 überlappt und mit den Schichten 3 und 4 heißverpreßt.

In Fig. 3 ist ein Abschnitt eines Kabelstranges 7 mit einer elastisch an diesem anliegenden Manschette 10 dargestellt. Diese Manschette 10 ist an ihrer Oberfläche mit einem spiralförmigen Gitter aus biegsamen Fäden 11, wie z. B. einem feinen Dreht oder Kunststoffäden versehen, die einerseits die flauschige Oberfläche der Manschette 10 festigen und andererseits beim Zusammendrücken der Manschette 10 in axialer Richtung ein Aufweiten der Manschette 10 in radialer Richtung bewirken. Dadurch kann der Kabelstrang 7 einfach in die Manschette 10 eingeführt werden. Weiterhin wird nach dem Entspannen der Manschette 10 der Anpreßdruck auf den Kabelstrang 7 verstärkt, und damit der Halt des Kabelstrangs 7 in der Manschette 10 verbessert.

Alternativ dazu zeigt Fig. 4 eine Manschette 12, die aus einem Wickel eines textilen Gewebes mit flauschiger Oberfläche auf dem Kabelstrang 7 gebildet ist. Dieses Material weist auf seiner Rückseite eine Klebstoffschicht 13 auf und ist selbstklebend.

Der mit den Manschetten 8 (1o oder 11) versehene Kabelstrang 7 ist durch Andrücken der Manschetten 8 an das Klettband 5 an diesem festhaftend lösbar fixierbar und durch Abreißen wieder von diesem trennbar. Montage und Demontage des Kabelstranges 7 sind somit auf einfache Weise durchführbar.

### BEZUGSZEICHENLISTE

- 1: Fahrzeughimmel
- 2: Dekorschicht
- 3: Vliesschicht
- 4: Vliesschicht
- 4a: Ausnehmung
- 5: Klettband
- 5a: Hafthaken
- 6: Wckelband
- 7: Kabelstrang
- 8.: Manschette
- 9: Klettband
- 9a: Hafthaken
- 10: Manschette
- 11: biegsamer Faden
- 12: Manschette
- 13: Klebstoffschicht

## Patentansprüche

1. Mit einem elektrischen Kabelstrang vorverkabeltes Auskleidungsteil für die Innenauskleidung eines Fahrzeuges, **dadurch gekennzeichnet**, daß das Auskleidungsteil entlang des anzuordnenden Kabelstranges (7) ein Klettband (5; 9) oder im Abstand angeordnete Klettbandabschnitte für den Kabelstrang (7) aufweist, und daß der Kabelstrang (7) mit einem Mantel oder im Abstand angeordneten und mit den Klettbandabschnitten korrespondierenden Manschetten (8; 10; 12) aus einem geeigneten Material zur Bildung einer lösbaren Haftverbindung mit dem Klettband (5; 9) oder den Klettbandabschnitten versehen ist.

2. Auskleidungsteil nach Anspruch 1, **dadurch gekennzeichnet**, daß das Klettband (5; 9) oder die im Abstand angeordneten Klettbandabschnitte auf der dem Fahrzeuginnern abgewandten Seite des Auskleidungsteiles angeordnet sind.

3. Auskleidungsteil nach Anspruch 1 oder 2, **dadurch gekennzeichnet**, daß der Mantel oder die Manschetten (8; 10; 12) aus einem textilen Gewebe oder einem Vliesmaterial mit flauschiger Oberfläche gebildet sind.

4. Auskleidungsteil nach einem der Ansprüche 1 bis 3, **dadurch gekennzeichnet**, daß der Mantel oder die Manschetten (10) an ihrem Umfang mit einem spiralförmigen Gitter aus biegsamen Fäden (11) versehen sind.

5. Auskleidungsteil nach Anspruch 4, **dadurch gekennzeichnet**, daß die biegsamen Fäden (11) Kunststoffäden sind.

6. Auskleidungsteil nach einem der Ansprüche 1 bis 3, **dadurch gekennzeichnet**, daß die Manschetten (8) elastisch aufweitbar sind.

7. Auskleidungsteil nach einem der Ansprüche 1 bis 3, **dadurch gekennzeichnet**, daß die Manschetten (12) fest um den Kabelstrang (7) gewickelt und verklebt sind.

8. Auskleidungsteil nach einem der Ansprüche 1 bis 7, **dadurch gekennzeichnet**, daß das Klettband (5; 9) oder die Klettbandabschnitte mit dem Auskleidungsteil (1) verklebt sind.

9. Auskleidungsteil nach einem der Ansprüche 1 bis 8, **dadurch gekennzeichnet**, daß das Auskleidungsteil (1) mehrschichtig aufgebaut ist und die äußere Schicht (4) im Bereich des Klettbandes (5; 9) oder des jeweiligen Klettbandabschnittes eine Ausnehmung (4a) aufweist, derart, daß das Klettband (5; 9) oder die Klettbandabschnitte auf der unter der äußeren Schicht (4) befindlichen Schicht (3) angeordnet und an den Randbereichen von der äußeren Schicht (4) überlappt und mit den Schichten (3; 4) verpreßt ist.

10. Auskleidungsteil nach Anspruch 9, **dadurch gekennzeichnet**, daß das Klettband (9) oder die Klettbandabschnitte in den Überlappungsbereichen frei von Hafthaken (9a) sind.
